# EUROPÄISCHE PATENTSCHRIFT

(11) **EP 3 580 006 B1**
(45) Veröffentlichungstag und Bekanntmachung des Hinweises auf die Patenterteilung: **07.04.2021**
(21) Anmeldenummer: 18702297.5
(22) Anmeldetag: 02.02.2018
(51) Int. Cl.: B23K 9/095, B23K 9/12

(54) **VERFAHREN UND VORRICHTUNG ZUR DETEKTION EINES SCHWEISSDRAHTDURCHMESSERS ODER EINER SCHWEISSDRAHTZUSAMMENSETZUNG BEI EINEM SCHWEISSGERÄT**
METHOD AND DEVICE FOR DETECTING A WELDING WIRE DIAMETER OR A WELDING WIRE COMPOSITION IN A WELDER
PROCÉDÉ ET DISPOSITIF DE DÉTECTION D'UN DIAMÈTRE DE FIL DE SOUDAGE OU D'UNE COMPOSITION DE FIL DE SOUDAGE DANS UN POSTE DE SOUDAGE

(30) Priorität: 07.02.2017 EP 17154951
(43) Veröffentlichungstag der Anmeldung: 18.12.2019
(73) Patentinhaber: Fronius International GmbH, 4643 Pettenbach (AT)
(72) Erfinder: HÖLLER, Dieter, 4591 Molln (AT); HARTL, Heinz, 4121 Altenfelden (AT); FRIEDL, Helmut, 4621 Sipbachzell (AT); WIMMER, Manfred, 4600 Wels (AT)
(74) Vertreter: Isarpatent
(86) Internationale Anmeldenummer: PCT/EP2018/052681
(87) Internationale Veröffentlichungsnummer: WO 2018/146023

(56) Entgegenhaltungen:
- EP-A2- 1 065 620
- WO-A1-2007/027117
- WO-A1-2008/031925
- US-A1- 2005 279 819

## Beschreibung

Verfahren und Vorrichtung zur Detektion eines Schweißdrahtdurchmessers oder einer Schweißdrahtzusammensetzung bei einem Schweißgerät, gemäß dem Oberbegriff der Ansprüche 1 und 10 (siehe, zum Beispiel, WO 2008/031925 A1).

Schweißgeräte werden dazu verwendet, Gegenstände durch Wärmeeinwirkung stoffschlüssig zu fügen oder Bauteile zu beschichten. Die gängigsten Schweißverfahren umfassen MIG/MAG-Schweißen, WIG-Schweißen und E-Hand-Schweißen. Metallschutzgasschweißgeräte (MSG-Schweißgeräte) lassen sich je nach Art des Schutzgases zum Metallaktivgas(MAG)- oder Metallinertgas(MIG)-Schweißen einsetzen. Bei einem Metallaktivgasverfahren entsteht zwischen einer zugeführten Drahtelektrode und einem Werkstück ein Lichtbogen. Es wird Schutzgas über eine Gasdüse zugeführt, sodass die Schmelze vor negativen Einflüssen der Luftatmosphäre geschützt wird. Das Metall-inertgas-Schweißverfahren funktioniert ähnlich wie das MAG-Verfahren, wobei allerdings das Schutzgas nicht aktiv am Schweißprozess teilnimmt, sondern allein zum Schutz vor Oxidation dient. Ähnlich wie beim MIG/MAG-Schweißen ist auch beim E-Hand-Schweißen die Schweißelektrode Träger des Lichtbogens und zugleich abschmelzender Schweißzusatz. Beim E-Hand-Schweißen wird die Schweißelektrode auch als Stabelektrode bezeichnet. Die Lichtbogenwärme schmilzt den Kerndraht der Stabelektrode und das Grundmaterial. Gleichzeitig liefert eine Umhüllung der Stabelektrode eine Gasglocke zum Schutz der erhitzten Werkstückoberfläche vor chemischen Reaktionen mit der umgebenden Luft.

Herkömmliche Schweißgeräte benötigen somit Schweißzusatzwerkstoffe, insbesondere Schweißdrähte, Drahtelektroden, Stabelektroden oder Fülldrähte. Die zugeführten Schweißdrähte oder Schweißelektroden können sich hinsichtlich ihrer Zusammensetzung oder hinsichtlich ihres Durchmessers unterscheiden. Für den Schweißprozess ist es wesentlich, dass geeignete Schweißzusatzwerkstoffe zugeführt werden. Nicht geeignete Schweißzusatzwerkstoffe, die aus einem weniger geeigneten Material bestehen oder einen nicht geeigneten Durchmesser besitzen, führen zu einer Qualitätsverminderung, bei den durch den Schweißprozess erzeugten Produkten bzw. Gegenständen. Eine durch einen ungeeigneten Schweißzusatzwerkstoff hergestellte Schweißnaht kann auch ein Sicherheitsproblem bei der Verwendung des hergestellten Produktes darstellen.

Es ist daher eine Aufgabe der vorliegenden Erfindung, ein Verfahren und eine Vorrichtung zum sicheren Detektieren eines Durchmessers und/oder einer Zusammensetzung eines Schweißdrahtes und/oder einer Schweißelektrode für ein Schweißgerät zu schaffen.

Diese Aufgabe wird erfindungsgemäß durch ein Verfahren mit den in Patentanspruch 1 angegebenen Merkmalen gelöst.

Die Erfindung schafft demnach ein Verfahren zum Detektieren eines Durchmessers und einer Zusammensetzung eines Schweißdrahtes und/oder einer Schweißelektrode für ein Schweißgerät, mit den folgenden Schritten:
Führen des Schweißdrahtes durch eine Spule, die mit einer Kapazität einen Schwingkreis bildet,
Ermitteln mindestens eines ersten Schwingkreisparameters, der für eine Dämpfung eines in dem Schwingkreis auftretenden Schwingungssignals charakteristisch ist, und mindestens eines zweiten Schwingkreisparameters, der für eine Signalfrequenz des in dem Schwingkreis auftretenden Schwingungssignals charakteristisch ist, und
Detektieren des Durchmessers und/oder der Zusammensetzung des durch die Spule geführten Schweißdrahtes und/oder der Schweiβelektrode anhand der ermittelten Schwingkreisparameter, wobei vor der Ermittlung der Schwingkreisparameter der Schweißdraht durch die Spule des Schwingkreises und / oder durch mindestens eine weitere Spule entmagnetisiert wird.

Bei einer möglichen Ausführungsform des erfindungsgemäßen Verfahrens weist der erste Schwingkreisparameter eine Schwingkreisgüte des Schwingkreises auf.

Bei einer weiteren möglichen Ausführungsform des erfindungsgemäßen Verfahrens weist der erste Schwingkreisparameter einen Wirbelstromverlust des Schwingkreises auf.

Im Allgemeinen wird festgehalten, dass im Zuge dieser Anmeldung Wirbelstromverluste auch weitere ohmsche Verluste der Spule sowie eventuell durch Ummagnetisierung auftretende Kernverluste mit einschließen.

Bei einer weiteren möglichen Ausführungsform des erfindungsgemäßen Verfahrens weist der erste Schwingkreisparameter eine Signaldämpfung des Schwingungssignals auf.

Bei einer weiteren möglichen Ausführungsform des erfindungsgemäßen Verfahrens weist der erste Schwingkreisparameter eine Abklingzeit des Schwingungssignals auf.

Bei einer möglichen Ausführungsform des erfindungsgemäßen Verfahrens weist der zweite Schwingkreisparameter, welcher für eine Signalfrequenz des in dem Schwingkreis auftretenden Schwingungssignals charakteristisch ist, eine Induktivität der Spule des Schwingkreises auf.

Bei einer weiteren möglichen Ausführungsform des erfindungsgemäßen Verfahrens wird der Durchmesser und/oder die Zusammensetzung des durch die Spule des Schwingkreises geführten Schweißdrahtes in Abhängigkeit der ermittelten Schwingkreisparameter durch Vergleich mit Referenzwerten ermittelt.

Bei einer weiteren möglichen Ausführungsform des erfindungsgemäßen Verfahrens geben die Referenzwerte für verschiedene Durchmesser und/oder für verschiedene Zusammensetzungen von Schweißdrähten zu erwartende Schwingkreisparameter an.

Bei einer weiteren möglichen Ausführungsform des erfindungsgemäßen Verfahrens werden die Referenzwerte der Schwingkreisparameter aus einem Referenzdatenspeicher ausgelesen und mit den ermittelten Schwingkreisparametern zur Detektion des Durchmessers und/oder der Zusammensetzung des durch die Spule des Schwingkreises geführten Schweißdrahtes verglichen.

Bei einer weiteren möglichen Ausführungsform des erfindungsgemäßen Verfahrens wird die Ermittlung der Schwingkreisparameter des Schweißdrahtes bei einem bewegten Schweißdraht durchgeführt.

Bei einer alternativen Ausführungsform des erfindungsgemäßen Verfahrens erfolgt die Ermittlung der Schwingkreisparameter bei stillstehendem Schweißdraht.

Bei einer weiteren möglichen Ausführungsform des erfindungsgemäßen Verfahrens wird in Abhängigkeit des ermittelten Durchmessers und/oder der ermittelten Zusammensetzung des Schweißdrahtes eine Meldung ausgegeben.

Bei einer weiteren möglichen Ausführungsform des erfindungsgemäßen Verfahrens werden Schweißparameter des Schweißgerätes in Abhängigkeit des ermittelten Durchmessers und/oder in Abhängigkeit der ermittelten Zusammensetzung des Schweißdrahtes automatisch eingestellt.

Bei einer weiteren möglichen Ausführungsform des erfindungsgemäßen Verfahrens wird die Entmagnetisierung des Schweißdrahtes bei bewegtem Schweißdraht durchgeführt.

Bei einer weiteren möglichen alternativen Ausführungsform des erfindungsgemäßen Verfahrens wird die Entmagnetisierung des Schweißdrahtes bei stillstehendem Schweißdraht durchgeführt. Bei einer weiteren möglichen Ausführungsform des erfindungsgemäßen Verfahrens wird zur Ermittlung der Schwingkreisparameter eine Kalibrierung mittels Referenzwerten und/oder mittels Sensorwerten durchgeführt.

Bei einer weiteren möglichen Ausführungsform des erfindungsgemäßen Verfahrens besteht der Schweißdraht aus mehreren verbundenen Schweißdrahtsegmenten, die jeweils einen eigenen Durchmesser und/oder eine eigene Zusammensetzung aufweisen.

Bei einer weiteren möglichen Ausführungsform des erfindungsgemäßen Verfahrens werden anhand der ermittelten Änderung der Schwingkreisparameter aufgrund des durch die Spule des Schwingkreises geführten Schweißdrahtes Übergänge zwischen verschiedenen Schweißdrahtsegmenten des Schweißdrahtes und/oder ein Ende des Schweißdrahtes erkannt.

Bei einer weiteren möglichen Ausführungsform des erfindungsgemäßen Verfahrens sind entlang des durch die Spule des Schwingkreises geführten Schweißdrahtes Markierungen vorhanden, welche Schwingkreisparameter des Schwingkreises beeinflussen.

Die Erfindung schafft ferner gemäß einem weiteren Aspekt eine Detektionsvorrichtung mit den in Patentanspruch 10 angegebenen Merkmalen.

Die Erfindung schafft demnach eine Detektionsvorrichtung zur Detektion eines Durchmessers und/oder einer Zusammensetzung eines Schweißdrahtes und/oder einer Schweißelektrode für ein Schweißgerät,
wobei die Detektionsvorrichtung aufweist:
einen Schwingkreis, der eine Spule aufweist, durch welche der Schweißdraht und/oder die Schweißelektrode führbar ist, und eine mit dem Schwingkreis verbundene Auswerteeinheit zur Ermittlung mindestens eines ersten Schwingkreisparameters, welcher für eine Dämpfung eines in dem Schwingkreis auftretenden
Schwingungssignals charakteristisch ist, und mindestens eines zweiten Schwingkreisparameters, welcher für eine Signalfrequenz des in dem Schwingkreis auftretenden Schwingungssignals charakteristisch ist,
wobei die Auswerteeinheit den Durchmesser und/oder die Zusammensetzung des durch die Spule des Schwingkreises geführten Schweißdrahtes und/oder der Schweißelektrode anhand der ermittelten Schwingkreisparameter detektiert,
wobei die Detektionsvorrichtung eine Entmagnetisierungseinheit zur Entmagnetisierung des Schweißdrahtes und / oder der Schweißelektrode aufweist.

Bei einer möglichen Ausführungsform der erfindungsgemäßen Detektionsvorrichtung weist der Schwingkreis einen LC-Parallelschwingkreis auf, der eine Spule und einen Kondensator umfasst.

Bei einer weiteren möglichen Ausführungsform der erfindungsgemäßen Detektionsvorrichtung ermittelt die Auswerteeinheit den Durchmesser und/oder die Zusammensetzung des durch die Spule des Schwingkreises geführten Schweißdrahtes in Abhängigkeit der ermittelten Schwingkreisparameter durch Vergleich mit Referenzwerten, die in einem Referenzdatenspeicher gespeichert sind, auf welchen die Auswerteeinheit Zugriff hat.

Bei einer weiteren möglichen Ausführungsform der erfindungsgemäßen Detektionsvorrichtung weist die Detektionsvorrichtung eine Kalibriereinheit zur Kalibrierung der Ermittlung von Schwingkreiskomponenten des Schwingkreises auf.

Die Erfindung schafft ferner gemäß einem weiteren Aspekt ein Schweißgerät mit einer Schweißdrahtzuführeinheit zum Zuführen eines Schweißdrahtes und/oder einer Schweißelektrode und mit einer Detektionsvorrichtung nach einem der Ansprüche 10 bis 13.

Die Erfindung schafft demnach eine Schweißdrahtzuführeinheit zum Zuführen eines Schweißdrahtes und/oder einer Schwei-βelektrode, wobei die Schweißdrahtzuführeinheit eine Detektionsvorrichtung nach einem der Ansprüche 10 bis 13 aufweist.

### Es zeigen:

- Fig. 1: ein Blockschaltbild zur Darstellung eines Beispiels einer Detektionsvorrichtung zur Detektion eines Durchmessers und/oder einer Zusammensetzung eines Schweißdrahtes und/oder einer Schweißelektrode für ein Schweißgerät;
- Fig. 2: ein exemplarisches Beispiel einer Detektionsvorrichtung gemäß Fig. 1;
- Fig. 3: ein Ersatzschaltbild des in Fig. 2 dargestellten LC-Parallelschwingkreises der Detektionsvorrichtung;
- Fig. 4: ein Blockschaltbild zur Darstellung eines weiteren Beispiel einer Detektionsvorrichtung;
- Fig. 5: ein Diagramm zur Erläuterung der Funktionsweise eines exemplarischen Ausführungsbeispiels des erfindungsgemäßen Verfahrens und der erfindungsgemäßen Vorrichtung mithilfe von Referenzwerten;
- Fig. 6: ein weiteres Diagramm zur Erläuterung eines exemplarischen Ausführungsbeispiels des erfindungsgemäßen Verfahrens und der erfindungsgemäßen Detektionsvorrichtung;
- Fig. 7: ein weiteres Blockschaltbild zur Darstellung eines möglichen Ausführungsbeispiels des erfindungsgemäßen Detektionsverfahrens und der erfindungsgemäßen Detektionsvorrichtung;
- Fig. 8: ein weiteres Blockschaltbild zur Darstellung eines exemplarischen Ausführungsbeispiels eines erfindungsgemäßen Detektionsverfahrens und einer erfindungsgemäßen Detektionsvorrichtung;
- Fig. 9: ein einfaches Ablaufdiagramm zur Darstellung eines exemplarischen Ausführungsbeispiels des erfindungsgemäßen Detektionsverfahrens.

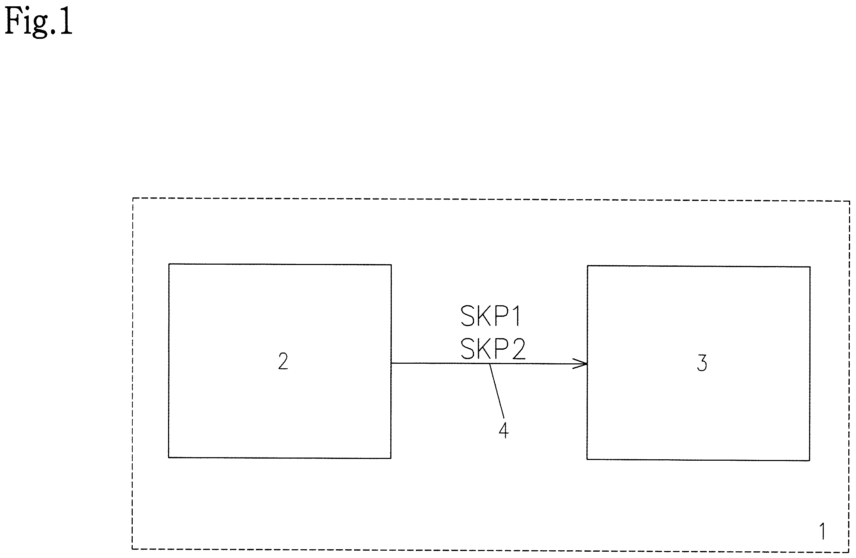

Wie man aus Fig. 1 erkennen kann, umfasst eine Detektionsvorrichtung 1 dem dargestellten Beispiel einen Schwingkreis 2 sowie eine Auswerteeinheit 3. Die in Fig. 1 dargestellte Detektionsvorrichtung 1 dient zur Detektion eines Durchmessers und/oder einer Zusammensetzung eines Schweißdrahtes und/oder einer Schweißelektrode für ein Schweißgerät. Die Detektionsvorrichtung 1 kann beispielsweise in einer Schweißdrahtzuführeinheit zum Zuführen eines Schweißdrahtes und/oder zum Zuführen einer Schweißelektrode in dem Schweißgerät enthalten sein. Weiterhin kann die Detektionsvorrichtung 1 in einem Bauteil oder einer Komponente des Schweißgerätes integriert sein.

Die Detektionsvorrichtung 1 beinhaltet einen Schwingkreis 2, der eine Spule aufweist, durch welche der Schweißdraht bzw. die Schweißelektrode hindurchführbar ist. Der elektrische Schwingkreis 2 ist über eine oder mehrere Signalleitungen 4 mit einer Auswerteeinheit 3 der Detektionsvorrichtung 1 verbunden. Die Signalleitungen 4 der Detektionsvorrichtung 1 können Teil eines Signalleitungsbusses innerhalb des Gerätes sein.

Der Schwingkreis 2 liefert Schwingkreisparameter SKP über die Signalleitungen 4 zu der Auswerteeinheit 3. Der Schwingkreis 2 gibt dabei vorzugsweise mindestens einen ersten Schwingkreisparameter SKP1 und einen zweiten Schwingkreisparameter SKP2 zur Auswertung an die Auswerteeinheit 3 aus. Die Auswerteeinheit 3 enthält mindestens einen Prozessor zur Auswertung der erhaltenen Schwingkreisparameter SKP.

Ein erster Schwingkreisparameter SKP1 des Schwingkreises 2 ist für eine Dämpfung eines in dem Schwingkreis 2 auftretenden Schwingungssignals charakteristisch. Der erste Schwingkreisparameter SKP1 umfasst eine Schwingkreisgüte des Schwingkreises 2 und/oder einen Wirbelstromverlust des Schwingkreises 2 und/oder eine Signaldämpfung des Schwingungssignals innerhalb des Schwingkreises 2 und/oder eine Abklingkonstante des Schwingungssignals innerhalb des Schwingkreises 2.

Der Schwingkreis 2 ist eine resonanzfähige elektrische Schaltung, welche mindestens eine elektrische Spule und einen Kondensator aufweist und elektrische Schwingungen ausführen kann. Der Schwingkreis 2 der Detektionsvorrichtung 1 ist ein LC-Parallelschwingkreis mit einer Spule und einem Kondensator. Der Schwingkreis 2 weist einen oder mehrere Schwingkreisparameter SKP auf, die für eine Dämpfung eines in dem Schwingkreis 2 auftretenden Schwingungssignals charakteristisch sind. Diese ersten Schwingkreisparameter SKP1 des Schwingkreises 2 umfassen die Schwingkreisgüte, Wirbelstromverluste, eine Signaldämpfung und/oder eine Abklingzeit des Schwingungssignals. Daneben weist der Schwingkreis 2 Schwingkreisparameter SKP2 auf, die für eine Signalfrequenz f des in dem Schwingkreis 2 auftretenden Schwingungssignals charakteristisch sind. Ein zweiter Schwingkreisparameter SKP2 wird beispielsweise durch eine Induktivität der Spule innerhalb des Schwingkreises 2 gebildet.

In dem Schwingkreis 2 treten in dessen Spule und Kondensator elektrische Verluste auf, welche dazu führen, dass die Schwingung des Schwingkreises gedämpft wird. Ein Maß bzw. ein Schwingkreisparameter für die auftretenden Verluste ist beispielsweise ein Gütefaktor bzw. eine Schwingkreisgüte des Schwingkreises 2.

Die Auswerteeinheit 3 ermittelt mindestens einen ersten Schwingkreisparameter SKP1, welcher für die Dämpfung des in dem Schwingkreis 2 auftretenden Schwingungssignals charakteristisch ist, und mindestens einen zweiten Schwingkreisparameter SKP2, welcher für eine Signalfrequenz f des in dem Schwingkreis 2 auftretenden Schwingungssignals rakteristisch ist. Die Auswerteeinheit 3 ermittelt den Durchmesser und/oder die Zusammensetzung des durch die elektrische Spule des Schwingkreises 2 geführten Schweißdrahtes in Abhängigkeit der Schwingkreisparameter SKP1, SKP2 durch Vergleich mit Referenzwerten. Diese Referenzwerte sind bei einer bevorzugten Ausführungsform in einem Referenzdatenspeicher gespeichert, auf welchen die Auswerteeinheit 3 Zugriff hat. Bei einer möglichen Ausführungsform ist der Referenzdatenspeicher ein lokaler Datenspeicher, aus welchem die Auswerteeinheit 3 die Referenzwerte auslesen kann. Bei einer alternativen Ausführungsform kann es sich bei dem Referenzdatenspeicher auch um einen nicht lokalen Speicher bzw. eine Datenbank handeln, auf welche die Auswerteeinheit 3 über ein Datennetzwerk Zugriff hat.

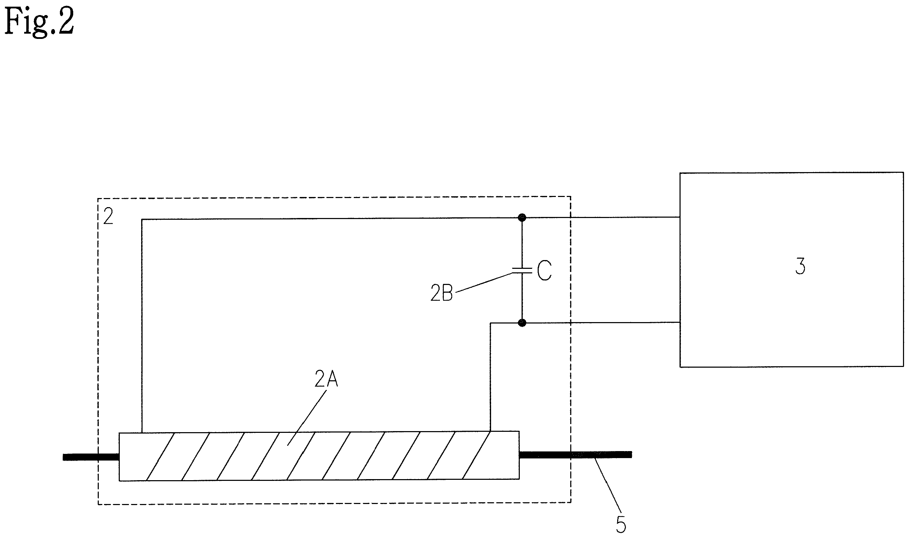

Fig. 2 zeigt ein einfaches Beispiel einer Detektionsvorrichtung 1. Bei dem in Fig. 2 dargestellten Beispiel enthält die Detektionsvorrichtung 1 einen LC-Parallelschwingkreis 2 mit einer elektrischen Spule 2A und mindestens einem dazu parallel geschalteten Kondensator 2B. Eine Auswerteelektronik der Auswerteeinheit 3 ist an den Parallelschwingkreis 2 angeschlossen.

Bei dem in Fig. 2 dargestellten Beispiel ist die elektrische Spule 2A eine Sensorluftspule, durch welche ein Schweißdraht oder eine Schweißelektrode hindurchgeführt wird. Diese Elektrode bildet einen Schweißzusatzwerkstoff. Bei einer möglichen Ausführungsform besteht der Schweißdraht bzw. die Schweißelektrode aus einem bestimmten Material. Weiterhin ist es möglich, dass der zugeführte Schweißzusatzwerkstoff mehrere Schichten umfasst, die aus unterschiedlichem Material bestehen. Der Schweißdraht ist zylinderförmig und besitzt zumindest abschnittsweise einen gleichmäßigen Durchmesser. Weiterhin kann der Schweißdraht bzw. der Schweißzusatzwerkstoff 5 bei einer möglichen Ausführungsform auch aus mehreren verbundenen Schweißdrahtsegmenten bestehen, die jeweils einen eigenen Durchmesser und/oder eine eigene chemische Materialzusammensetzung besitzen. Bei einer möglichen Ausführungsform werden anhand der ermittelten Änderungen der Schwingkreisparameter SKP des Schwingkreises 2 aufgrund des durch die Spule 2A des Schwingkreises 2 geführten Schweißdrahtes 5 Übergänge zwischen verschiedenen Schweißdrahtsegmenten des Schweißdrahtes 5 und/oder ein Ende des Schweißdrahtes 5 automatisch durch die Auswerteeinheit 3 der Detektionsvorrichtung 1 erkannt. Bei einer weiteren möglichen Ausführungsform können entlang des durch die Spule 2A des Schwingkreises 2 geführten Schweißdrahtes 5 an diesem auch Markierungen, beispielsweise Einkerbungen, vorhanden sein, welche geeignet sind, Schwingkreisparameter SKP des Schwingkreises 2 zu beeinflussen. Auf diese Weise kann die Auswerteeinheit Markierungen, die entlang des Schweißdrahtes bzw. des Schweißzusatzwerkstoffes 5 angebracht sind, automatisch erkennen und melden.

Bei einer möglichen Ausführungsform wird die Transportgeschwindigkeit bzw. Bewegungsgeschwindigkeit des Schweißdrahtes bzw. des Schweißzusatzwerkstoffes, welcher durch die elektrische Spule 2A des Schwingkreises 2 hindurchgeführt wird, detektiert. Dies kann bei einer möglichen Ausführungsform mittels entlang des Schweißdrahtes in gleichmäßigen Abständen angebrachten Markierungen erfolgen, welche Schwingkreisparameter SKP des Schwingkreises 2 beeinflussen.

Bei dem in Fig. 2 dargestellten Beispiel weist der Schwingkreis 2 neben der Spule 2A einen Kondensator 2B auf, der zu der Spule 2A parallel verschaltet ist. Bei einer möglichen Ausführungsform besitzt der Kondensator 2B eine feste vorbekannte Kapazität. Bei einer alternativen Ausführungsform wird die Kapazität des Schwingkreises durch eine parasitäre Kapazität der Spule 2A des Schwingkreises 2 gebildet.

Der Durchmesser und/oder die Zusammensetzung des durch die Spule 2A des Schwingkreises 2 geführten Schweißdrahtes bzw. Schweißzusatzwerkstoffes wird bei einer möglichen Ausführungsform in Abhängigkeit der ermittelten Schwingkreisparameter SKP durch Vergleich mit Referenzwerten detektiert. Diese Referenzwerte werden bei einer möglichen Ausführungsform aus einem Referenzdatenspeicher ausgelesen. Die Referenzwerte geben für verschiedene Durchmesser und/oder für verschiedene Zusammensetzungen von Schweißdrähten und/oder von Schweißelektroden zu erwartende Schwingkreisparameter SKP an. Die Referenzwerte der Schwingkreisparameter SKP werden aus dem Referenzdatenspeicher ausgelesen und mit den ermittelten Schwingkreisparametern SKP des Schwingkreises 2 zur Detektion des Durchmessers und/oder der Zusammensetzung des durch die Spule 2A des Schwingkreises 2 geführten Schweißdrahtes bzw. Schweißzusatzwerkstoffes verglichen.

Bei einer möglichen Ausführungsform der erfindungsgemäßen Detektionsvorrichtung 1 erfolgt die Ermittlung der Schwingkreisparameter SKP bei bewegtem Schweißdraht bzw. bewegtem Schweißzusatzwerkstoff. Alternativ kann die Ermittlung der Schwingkreisparameter SKP auch bei einem stillstehenden Schweißdraht bzw. stillstehenden Schweißzusatzwerkstoff durchgeführt werden.

In Abhängigkeit des ermittelten Durchmessers und/oder der ermittelten Zusammensetzung des Schweißdrahtes bzw. des Schweißzusatzwerkstoffes kann die Auswerteeinheit 3 der Detektionsvorrichtung 1 über eine Schnittstelle eine Meldung ausgeben. Beispielsweise kann die Auswerteeinheit 3 melden, dass der falsche Schweißzusatzwerkstoff bzw. der falsche Schweißdraht eingelegt worden ist. Beispielsweise kann der zugeführte Schweißzusatzwerkstoff nicht zu den eingestellten Schweißparametern SKP des Schweißgerätes passen oder zu dem Kontaktrohr des Schweißgerätes. Die Auswerteeinheit 3 der Detektionsvorrichtung 1 kann den ermittelten Durchmesser und/oder die ermittelte Zusammensetzung des Schweißdrahtes bzw. des Schweißzusatzwerkstoffes 5 an eine Steuereinheit des Schweißgerätes melden bzw. übertragen, welche anschließend in Abhängigkeit des Durchmessers und/oder in Abhängigkeit der ermittelten Zusammensetzung des Schweißdrahtes automatisch Schweißparameter SP einstellt. Die Steuervorrichtung kann bei einer möglichen Ausführungsform in Abhängigkeit des Durchmessers und/oder der Zusammensetzung des Schweißdrahtes weitere Steuersignale generieren. Beispielsweise kann bei einem als nicht passend erkannten Schweißdraht die Zuführung des Schweißdrahtes automatisch gestoppt werden. Weiterhin kann beispielsweise bei einem als zu gering erkannten Durchmesser des eingelegten Schweißdrahtes die Zuführgeschwindigkeit des Schweißdrahtes automatisch gesteigert werden, um eine ausreichende Menge an Schweißdraht dem Schweißprozess zuzuführen. Bei einer weiteren möglichen Ausführungsform wird der ermittelte Durchmesser und/oder die ermittelte Zusammensetzung des Schweißdrahtes einem Nutzer bzw. Schweißer über eine Nutzerschnittstelle automatisch angezeigt. Beispielsweise kann dem Schweißer bzw. Nutzer angezeigt werden, dass der eingelegte Schweißdraht nicht geeignet ist und ausgetauscht werden muss. Weiterhin kann beispielsweise einem Schweißer oder einem Nutzer angezeigt werden, dass der eingelegte Schweißdraht zwar die geeignete Zusammensetzung aufweist, jedoch nicht einen für den Schweißprozess geeigneten Durchmesser.

Bei einer weiteren möglichen Variante kann die Auswerteeinheit 3 eine Steuereinheit derart ansteuern, dass ein als nicht geeignet erkannter Durchmesser des Schweißdrahtes durch Veränderung der Zuführgeschwindigkeit des Schweißdrahtes entsprechend den geforderten Schweißparametern des Schweißprozesses ausgeglichen wird.

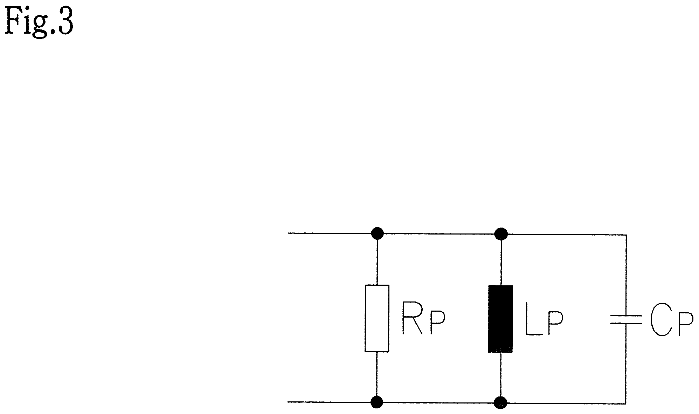

Fig. 3 zeigt ein Ersatzschaltbild des in Fig. 2 dargestellten LC-Parallelschwingkreises 2. Die Spule 2A des LC-Parallelschwingkreises 2 umfasst eine Induktivität L_{P} und einen ohmschen Widerstand R_{P}. Der ohmsche Widerstand R_{P} umfasst die gesamten Verluste des Schwingkreises, die im Zuge dieser Anmeldung Wirbelstromverluste bezeichnet werden. Mit zunehmender Induktivität der Spule 2A sinkt die Frequenz des freien Schwingungssignals des Schwingkreises 2. Die zunehmende Induktivität der Spule 2A wird beispielsweise durch einen durch die Spule geführten ferromagnetischen Zusatzwerkstoff bewirkt.

Bei einer möglichen Ausführungsform kann als Schwingkreisparameter SKP, der für eine Signalfrequenz des in dem Schwingkreis 2 auftretenden Schwingungssignals charakteristisch ist, somit die Induktivität der Spule 2A des Schwingkreises 2 verwendet werden. Als Schwingkreisparameter SKP, der für eine Dämpfung eines in dem Schwingkreis 2 auftretenden Schwingungssignals charakteristisch ist, können bei einer möglichen Ausführungsform die Wirbelstromverluste des Schwingkreises 2 herangezogen werden.

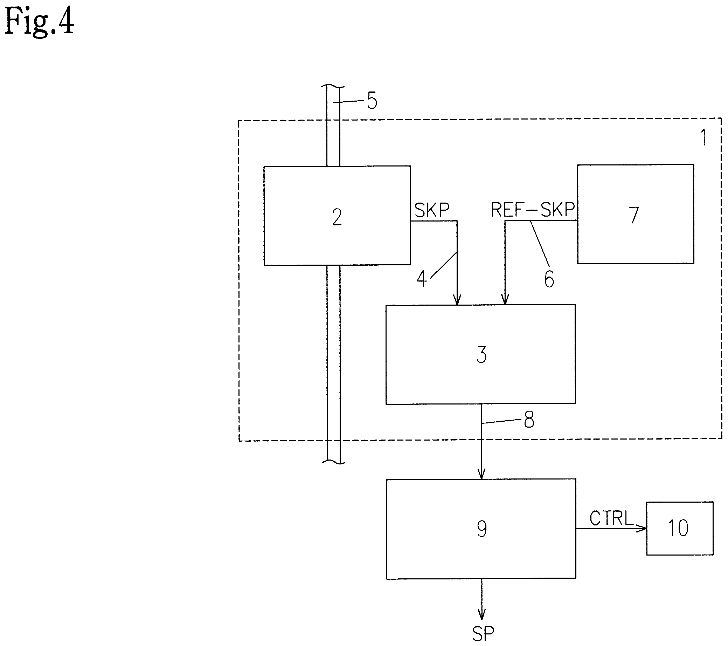

Fig. 4 zeigt ein Blockschaltbild einer nichterfindungsgemäßen Detektionsvorrichtung 1. Die Detektionsvorrichtung 1 enthält dabei einen Schwingkreis 2, welcher Schwingkreisparameter SKP über Signalleitungen 4 an die Auswerteeinheit 3 der Detektionsvorrichtung 1 liefert. Ein Schweißdraht bzw. ein Schweißzusatzwerkstoff 5 wird durch eine Spule des Schwingkreises 2 hindurchgeführt, wie in Fig. 4 dargestellt. Die Auswerteeinheit 3 ist über Signalleitungen 6 mit einem Referenzdatenspeicher 7 der Detektionsvorrichtung 1 verbunden. Die Auswerteeinheit 3 ermittelt den Durchmesser und/oder die Zusammensetzung des durch die Spule 2A des Schwingkreises 2 geführten Schweißdrahtes 5 in Abhängigkeit der ermittelten Schwingkreisparameter SKP im Vergleich mit Referenzwerten, die in dem Referenzdatenspeicher 7 gespeichert sind. Der ermittelte Durchmesser und/oder die ermittelte Zusammensetzung des Schweißdrahtes 5 kann bei einer möglichen Ausführungsform als Meldung über Signalleitungen 8 an eine Steuereinheit 9 des Schweißgerätes übertragen werden. Die Steuereinheit 9 des Schweißgerätes stellt in Abhängigkeit des Durchmessers und/oder der ermittelten Zusammensetzung des Schweißdrahtes 5 eine oder mehrere Schweißparameter SP automatisch ein. Weiterhin kann die Steuereinheit 9 bei einer möglichen Ausführungsform Steuersignale CTRL über eine oder mehrere Aktoren 10 des Schweißgerätes in Abhängigkeit des ermittelten Durchmessers und/oder in Abhängigkeit der ermittelten Zusammensetzung des Schweißdrahtes 5 generieren. Beispielsweise kann ein Aktor 10 die Zuführung des Schweißdrahtes 5 zu dem Schweißprozess automatisch stoppen, sofern der ermittelte Durchmesser und/oder die ermittelte Zusammensetzung des Schweißdrahtes 5 für den Schweißprozess nicht geeignet sind. Bei einem weiteren Ausführungsbeispiel der Detektionsvorrichtung 1 werden zur Qualitätsüberwachung der Durchmesser und/oder die Zusammensetzung des Schweißdrahtes 5, welche durch die Auswerteeinheit 3 ermittelt werden, mitprotokolliert bzw. zur weiteren Datenverarbeitung gespeichert.

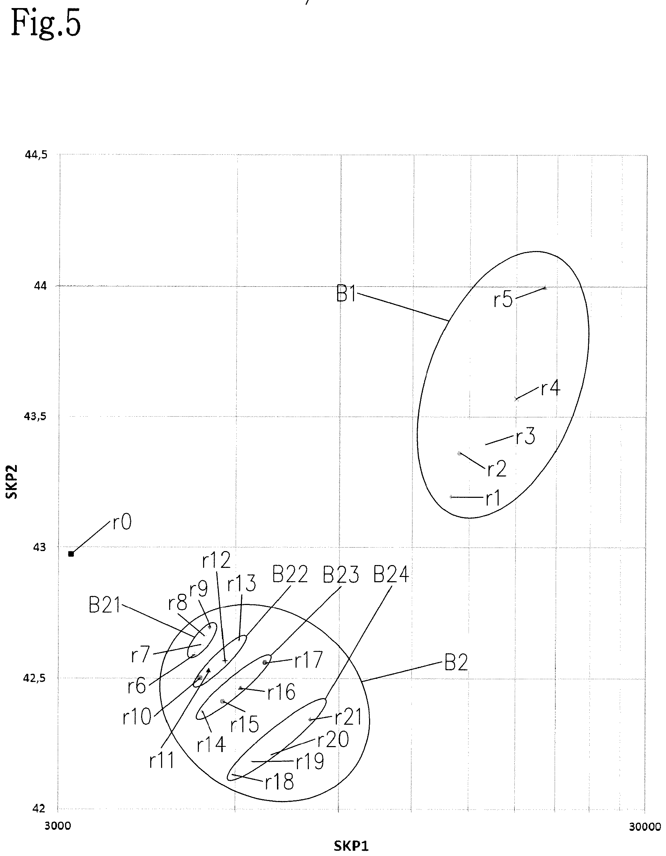

Fig. 5 zeigt ein Diagramm zur Erläuterung der Funktionsweise einer erfindungsgemäßen Detektionsvorrichtung 1 bzw. eines erfindungsgemäßen Verfahrens zur Detektion eines Durchmessers und/oder zur Detektion einer Zusammensetzung eines Schweißdrahtes und/oder einer Schweißelektrode für ein Schweißgerät. Das in Fig. 5 dargestellte Diagramm zeigt Referenzwerte, die in einem Referenzdatenspeicher 7 abgelegt sein können und die es der Auswerteeinheit 3 der Detektionsvorrichtung 1 ermöglichen, einen Durchmesser und/oder eine Zusammensetzung des zugeführten Schweißdrahtes 5 automatisch zu ermitteln bzw. zu erkennen. Das dargestellte Diagramm zeigt für unterschiedliche Wirbelstromverluste und Induktivitäten Vergleichs- bzw. Referenzmesswerte für unterschiedliche Schweißzusatzwerkstoffe bzw. Schweißdrähte mit unterschiedlichen Durchmessern und unterschiedlichen Materialien bzw. Zusammensetzungen. In dem Diagramm gemäß Fig. 5 bezeichnet die x-Achse Wirbelstromverluste. Die Wirbelstromverluste stellen einen ersten Schwingkreisparameter SKP1 des Schwingkreises 2 dar, der für eine Dämpfung eines in dem Schwingkreis 2 auftretenden Schwingungssignals charakteristisch ist. Die in der y-Achse dargestellte Induktivität L der Spule 2A des Schwingkreises 2 stellt einen zweiten Schwingkreisparameter SKP2 dar, welcher für eine Signalfrequenz f des in dem Schwingkreis 2 auftretenden Schwingungssignals charakteristisch ist.

Das in Fig. 5 dargestellte Diagramm zeigt verschiedene Referenzwerte r für unterschiedliche Schweißzusatzwerkstoffe. Dabei bilden je ein Paar von zu erwartenden Schwingkreisparametern SKP den jeweiligen Referenzwert bei einem bestimmten bekannten Schweißzusatzwerkstoff 5. Das in Fig. 5 dargestellte Diagramm ist zweidimensional und umfasst eine x-Achse für einen ersten Schwingkreisparameter SKP1 und eine y-Achse für einen zweiten Schwingkreisparameter SKP2. Bei einer möglichen Ausführungsform werden auch drei- oder mehrdimensionale Referenzwerttabellen verwendet, die Referenzwerte r für mehr als zwei unterschiedliche Schwingkreisparameter SKP beinhalten. Beispielsweise kann das in Fig. 5 dargestellte zweidimensionale Referenzdatenfeld um eine dritte Dimension bzw. z-Achse erweitert werden, welche einen dritten Schwingkreisparameter SKP3 des Schwingkreises 2 oder einen sonstigen gemessenen Parameter abbildet. So kann in einer möglichen Ausführung der Durchmesser des Schweißzusatzwerkstoffes mithilfe anderer Mittel, beispielsweise mechanischer Messung, bestimmt werden. Ist der Durchmesser als 3. Parameter bekannt, kann die Erkennung der Zusammensetzung des Schweißzusatzwerkstoffs verbessert werden, da nur mehr Referenzwerte r mit demselben Durchmesser betrachtet werden müssen.

Falls ein gemessener erster Schwingkreisparameter SKP1, beispielsweise ein Wirbelstromverlust, und ein zweiter Schwingkreisparameter SKP2, beispielsweise die Spuleninduktivität, mit einem in dem Diagramm gemäß Fig. 5 eingetragenen und im Referenzdatenspeicher 7 gespeicherten Referenzwert übereinstimmt, erkennt die Auswerteeinheit 3 anhand der beiden Schwingkreisparameter SKP1, SKP2, dass es sich bei dem Schweißzusatzwerkstoff um den entsprechenden bekannten Schweißzusatzwerkstoff handelt. Bei einem Matching der gemessenen Schwingkreisparameter SKP1, SKP2 mit den eingetragenen Referenzschwingkreisparametern r kann somit ein bestimmter Schweißzusatzwerkstoff detektiert werden. Kommt es zu keinem Matching bzw. zu keiner Übereinstimmung wird der zugeführte Schweißzusatzwerkstoff 5 seitens der Auswerteeinheit 3 nicht erkannt, wobei dies über eine Schnittstelle, beispielsweise einer Steuereinheit des Schweißgerätes, gemeldet werden kann. Die Steuereinheit kann bei Nichterkennung des zugeführten Schweißzusatzwerkstoffes 5 einen Aktor 10 des Schweißgerätes entsprechend ansteuern, beispielsweise die Zuführung des Schweißzusatzwerkstoffes stoppen. Weiterhin kann ein Schweißer oder Nutzer dahingehend informiert werden, dass der eingelegte Schweißzusatzwerkstoff nicht erkannt worden ist und möglicherweise für den gewünschten Schweißprozess nicht geeignet ist. Ein Nutzer bzw. Schweißer kann anschließend prüfen, ob der eingesetzte nicht erkannte Schweißzusatzwerkstoff ausgetauscht werden muss oder nicht. Ist der nicht erkannte Schweißzusatzwerkstoff dennoch für den Schweißprozess geeignet, kann der Nutzer bzw. Schweißer das Schweißgerät instruieren, mit dem eingesetzten Schweißzusatzwerkstoff den Schweißvorgang fortzusetzen. Bei einer weiteren möglichen Ausführungsform kann der Nutzer bzw. Schweißer über eine Nutzerschnittstelle zudem einen Befehl eingeben, welcher die Auswerteeinheit 3 der Detektionsvorrichtung 1 dazu veranlasst, die für den unbekannten Schweißzusatzwerkstoff ermittelten Schwingkreisparameter SKP automatisch in den Referenzdatenspeicher 7 einzuschreiben bzw. abzuspeichern, wobei der Nutzer über eine Nutzerschnittstelle eine Eingabe vornimmt, welche den ihm bekannten Schweißzusatzstoff 5 den abgespeicherten Schwingkreisparametern SKP zuordnet. Beispielsweise kann ein Schweißer bzw. Nutzer über das Nutzerinterface eingeben, dass es sich bei dem bisher unbekannten im Referenzdatenspeicher nicht abgelegten Schweißzusatzwerkstoff um einen Schweißdraht aus Aluminium (AlMg5) mit einem Durchmesser von 1 mm handelt.

Weitere Ausführungsvarianten sind möglich. Wird beispielsweise anhand der ermittelten Schwingkreisparameter SKP kein eindeutiges Matching bzw. eine eindeutige Übereinstimmung mit abgespeicherten Referenzwerten r von bekannten Schweißzusatzwerkstoffen gefunden, kann anhand der erfassten Schwingkreisparameter SKP bei einer möglichen Ausführungsvariante eine grobe Zuordnung zu einer Werkstoffklasse, beispielsweise zu ferromagnetischen Werkstoffen (Fig. 5, Gruppe B1). Fig. 5, Gruppe B2 hingegen umfasst diamagnetische und paramagnetische Werkstoffe. Ist der eingelegte Schweißzusatzwerkstoff 5 aufgrund dieser groben Bestimmung zu einer bestimmten Gruppe von Schweißzusatzwerkstoffen für den aktuellen Schweißprozess nicht geeignet, kann dies bei einer möglichen Ausführungsform dem Schweißer bzw. Nutzer gemeldet werden und ggf. zusätzlich durch Aktoren 10 der Schweißprozess unterbrochen werden.

Die Detektionsvorrichtung 1 kann bei einer möglichen Ausführungsform ein Werkstoffmaterial und bzw. oder eine Werkstoffdicke bzw. einen Werkstoffdurchmesser des zugeführten Schweißzusatzwerkstoffes 5 automatisch erkennen und ggf. über eine Schnittstelle melden. Weiterhin kann die Steuereinheit 9 auf Basis des erkannten Schweißzusatzwerkstoffes eine automatische Einstellung von Schweißparametern SP durchführen. Weiterhin kann anhand der ermittelten Schwingkreisparameter SKP bei einer möglichen Ausführungsform durch die Auswerteeinheit 3 erkannt werden, ob überhaupt ein Schweißzusatzwerkstoff vorhanden ist, beispielsweise wenn sich die ermittelten Schwingkreisparameter SKP außerhalb eines vorgegebenen Bereichs oder in der Nähe eines dafür gespeicherten Referenzwertes r0 befinden. r0 stellt den Referenzwert der Schwingkreisparameter bei nicht vorhandenem Schweißzusatzwerkstoff dar. In diesem Falle kann ein Nutzer bzw. Schweißer über eine Nutzerschnittstelle darüber informiert werden und aufgefordert werden, einen Schweißzusatzwerkstoff 5 einzulegen.

Weitere Ausführungsvarianten sind möglich. Wie man aus dem Diagramm gemäß Fig. 5 erkennen kann, besitzen beispielsweise verschiedene Schweißzusatzwerkstoffe bzw. Schweißdrähte, die unterschiedlich zusammengesetzt sind, jedoch beispielsweise einen gleichen Durchmesser d besitzen, eine gewisse lineare Abhängigkeit zwischen der Induktivität L der Schwingkreisspule und den aufgetretenen Wirbelstromverlusten. Dies ist beispielsweise in der Fig. 5 anhand der Gruppen B21, B22, B23 und B24 dargestellt. So weist z.B. die Gruppe B24 von diamagnetischen und paramagnetischen Schweißzusatzwerkstoffen 5 (r18 bis r21) einen Durchmesser d von 1,6 mm auf, wobei die Schweißzusatzwerkstoffe 5 aus unterschiedlichen Materialien bestehen bzw. eine unterschiedliche Zusammensetzung besitzen. Wird bei der Ermittlung der Schwingkreisparameter SKP bei einem eingelegten unbekannten Schweißzusatzwerkstoff 5 eine Induktivität und ein Wirbelstromverlust gemessen bzw. ermittelt, der in der Nähe einer extrapolierten Kurve einer bestimmten Gruppe von Schweißzusatzwerkstoffen liegt, die zwar aus unterschiedlichen Materialien bestehen, jedoch einen gleichen Durchmesser aufweisen, kann anhand des Referenzwertdiagramms gemäß Fig. 5 zumindest erkannt werden, dass der eingesetzte Schweißzusatzwerkstoff 5 vermutlich den entsprechenden Durchmesser d aufweist, ohne ihm eine eindeutige Materialzusammensetzung zuordnen zu können.

Bei einer weiteren möglichen Ausführungsform kann anhand eines Abstandes zwischen den sensorisch ermittelten Schwingkreisparametern SKP und den Referenzschwingkreisparametern r (SKP1ᵣ, SKP2ᵣ) gemäß der in Fig. 5 dargestellten Referenzwerte r ausgerechnet werden, wie hoch die Wahrscheinlichkeit P ist, dass es sich bei dem eingelegten Schweißzusatzwerkstoff 5 um einen der bekannten abgespeicherten Schweißzusatzwerkstoffe handelt. Je größer der Abstand zwischen dem durch die beiden Schwingkreisparameter SKP1, SKP2 definierten Punkt und dem abgelegten Referenzpunkt r ist, desto geringer ist die Wahrscheinlichkeit P, dass es sich um den betreffenden bekannten Schweißzusatzwerkstoff handelt.

Bei einer weiteren möglichen Ausführungsform kann anhand der Schwingkreisparameter SKP beispielsweise festgestellt werden, ob es sich bei dem Material des Schweißzusatzwerkstoffes 5 um einen diamagnetischen oder paramagnetischen Werkstoff (Gruppe B2) oder um einen ferromagnetischen Werkstoff (Gruppe B1) handelt. Bei ferromagnetischen Werkstoffen kann es für eine genaue Differenzierung des Materials notwendig sein, den Werkstoff vor der Messung zu entmagnetisieren.

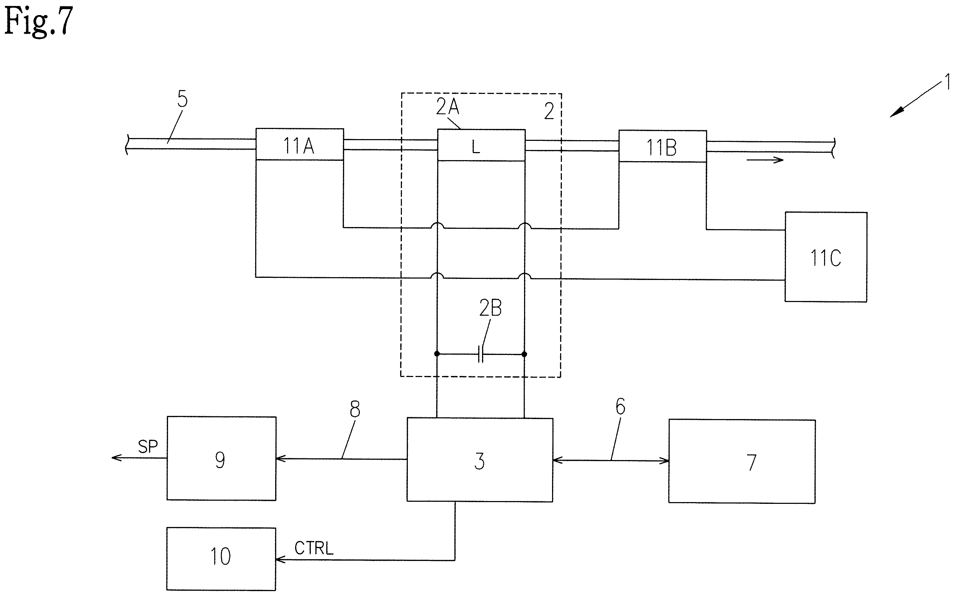

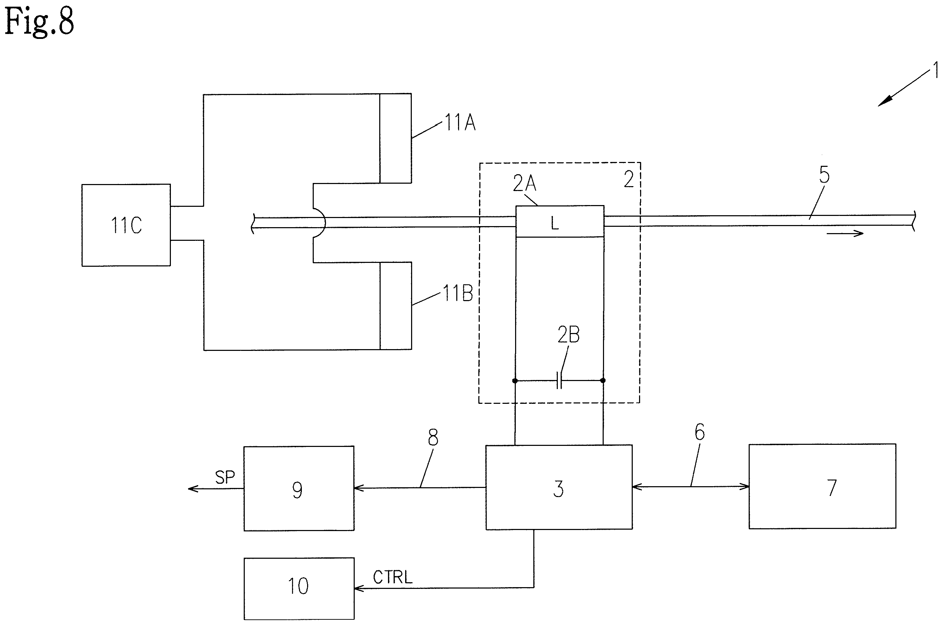

Bei der erfindungsgemäßen Detektionsvorrichtung 1 besitzt diese eine Entmagnetisierungseinheit zur Entmagnetisierung des Schweißdrahtes und/oder der Schweißelektrode. Mögliche Ausführungsvarianten sind in den Blockschaltbildern gemäß Fig. 7, 8 dargestellt.

Bei der in Fig. 7 dargestellten Ausführungsvariante umfasst die Entmagnetisierungseinheit 11 der Detektionsvorrichtung 1 zwei seriell verschaltete Spulen 11A, 11B, durch die der Zusatzwerkstoff bzw. der Schweißdraht 5 hindurchgeführt wird. Bei dem in Fig. 7 dargestellten Ausführungsbeispiel sind die beiden Spulen 11A, 11B auf beiden Seiten der Spule 2A des Schwingkreises 2 vorgesehen. Die beiden seriell verschalteten Entmagnetisierungsspulen 11A, 11B sind an einen Signalgenerator 11C der Entmagnetisierungseinheit 11 angeschlossen, der die beiden Entmagnetisierungsspulen 11A, 11B derart ansteuert, dass ein starkes Wechselmagnetfeld entsteht, das allmählich abklingt, um das Material des durch die Entmagnetisierungsspulen 11A, 11B hindurchgeführten Schweißzusatzwerkstoffes bzw. Schweißdrahtes zu entmagnetisieren. Das Magnetfeld ist dabei vorzugsweise derart stark, dass die Koerzitivfeldstärke des aufmagnetisierten Materials erreicht wird. Durch das Wechselfeld erfolgt eine Ummagnetisierung der Materialien mit abnehmender Amplitude. Dabei kann eine Hysteresekurve mit abnehmender Amplitude der magnetischen Feldstärke und der Magnetflussdichte durchlaufen werden, bis das Dauermagnetfeld null ist. Bei der in Fig. 7 dargestellten Ausführungsvariante erfolgt die Entmagnetisierung vorzugsweise bei einem stillstehenden Draht bzw. bei einem stillstehenden Schweißzusatzwerkstoff 5. Zunächst wird der Schweißzusatzwerkstoff bzw. Schweißdraht 5 entmagnetisiert und anschließend erfolgt die Ermittlung der Schwingkreisparameter SKP des Schwingkreises 2 mithilfe der Spule 2A des Schwingkreises 2, durch den der Zusatzwerkstoff 5 bewegt wird.

Bei einer möglichen Ausführungsvariante erfolgt zunächst mithilfe des Schwingkreises 2 eine grobe Bestimmung des Werkstoffes bzw. des Materials des zugeführten Schweißdrahtes 5. Handelt es sich bei dem Werkstoff des Schweißdrahtes 5 um ein ferromagnetisches Material, erfolgt anschließend eine Entmagnetisierung mithilfe der Entmagnetisierungseinheit 11. In einem weiteren Schritt erfolgt dann anschließend eine genauere Bestimmung des Durchmessers und/oder der Zusammensetzung des Schweißdrahtes 5. Bei der in Fig. 7 dargestellten Ausführungsvariante verläuft das H-Feld im Wesentlichen parallel zu der Ausrichtung des Schweißzusatzwerkstoffes bzw. des Schweißdrahtes 5. Hierdurch kann das H-Feld in geeigneter Weise auf den Schweißdraht 5 gebündelt werden. Um den Schweißdraht 5 gleichmäßig zu entmagnetisieren, ist bei der in Fig. 7 dargestellten Ausführungsvariante vor und nach der Sensorspule 2A des Schwingkreises 2 eine Magnetisierungsspule 11A, 11B platziert. Beispielsweise kann mithilfe des Signalgenerators 11C ein 100 Hz-Sinussignal abklingend über eine Zeitdauer von 1 bis 2 sec an die Entmagnetisierungsspulen 11A, 11B angelegt werden, um den Schweißdraht 5 zu entmagnetisieren. Zur Platzeinsparung und Effizienzsteigerung kann der abklingende Sinusstrom mit einer H-Brücke (PWM) erzeugt werden.

Fig. 8 zeigt eine weitere Ausführungsvariante einer Detektionsvorrichtung 1 mit einer Entmagnetisierungseinheit 11. Bei der in Fig. 8 dargestellten Ausführungsvariante verlaufen die Feldlinien des H-Feldes im Wesentlichen senkrecht zur Ausrichtung des Schweißdrahtes 5. Bei der in Fig. 8 dargestellten Ausführungsvariante erfolgt die Entmagnetisierung des Schweißdrahtes bei bewegtem Schweißdraht 5. Ein magnetisches Wechselfeld wird normal zur Drahtbewegung durch den Schweißdraht 5 geführt. Durch die Bewegung des Schweißdrahtes klingt das Magnetfeld ab.

Bei einer weiteren möglichen Ausführungsform kann durch die in Fig. 8 dargestellte Anordnung 11 auch eine Aufmagnetisierung von Informationen bzw. Daten auf den Schweißdraht 5 realisiert werden. Bei dieser Ausführungsvariante können ähnlich wie bei einer Tonbandkassette Informationen bzw. Daten auf den Schweißdraht 5 aufmagnetisiert bzw. dort gespeichert werden, die an anderer Stelle ausgelesen werden können.

Weitere Ausführungsvarianten der erfindungsgemäßen Detektionsvorrichtung 1 und des erfindungsgemäßen Verfahrens zur Detektion eines Durchmessers und/oder einer Zusammensetzung eines Schweißdrahtes und/oder einer Schweißelektrode für ein Schweißgerät sind möglich.

Bei einer möglichen Ausführungsvariante erfolgt eine Messung bei verschiedenen Frequenzen. Bei ähnlichen Legierungen bzw. Zusammensetzungen kann zur besseren Unterscheidung eine Messung bei verschiedenen Frequenzen erfolgen.

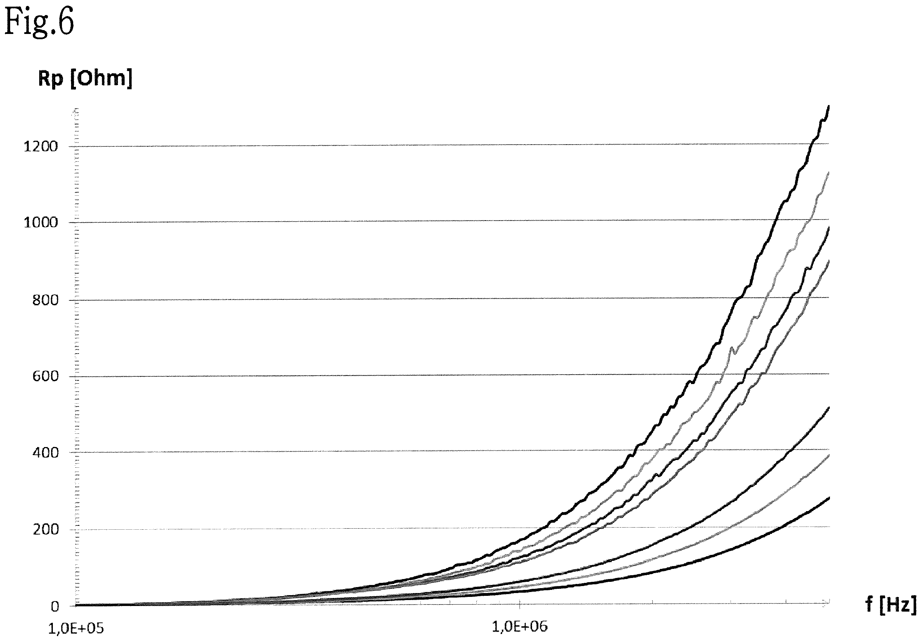

Fig. 6 zeigt ein Diagramm, bei dem Wirbelstromverluste von verschiedenen Materialien über die Frequenz f ermittelt werden. Die durch die Wirbelstromverluste hervorgerufenen ohmschen Verluste Rₚ (Ohm) sind in Abhängigkeit von der Frequenz f des Schwingkreises 2 dargestellt. Unterschiedliche Materialien von Schweißdrähten verhalten sich über die Frequenz f unterschiedlich. Mit steigender Frequenz f steigen die Wirbelstromverluste an.

Bei einer weiteren möglichen Ausführungsform der erfindungsgemäßen Detektionsvorrichtung 1 weist die Detektionsvorrichtung zusätzlich eine Kalibriereinheit zur Kalibrierung von Schwingkreiskomponenten des Schwingkreises 2 auf. Die Kalibrierung kann dabei mittels Referenzwerten und/oder mittels Sensorwerten erfolgen. Schwingkreisparameter SKP können von äußeren Einflüssen abhängen, beispielsweise Temperatur und Luftfeuchtigkeit oder dergleichen. Bei einer möglichen Ausführungsform wird mittels einer Sensorik die Temperatur T und/oder die Luftfeuchtigkeit ermittelt und der Schwingkreis 2 anhand der Sensorwerte zunächst kalibriert bzw. justiert. In einer möglichen Ausführungsform der Kalibrierung kann diese auch über die Referenzwerte erfolgen. Dazu wird eine Messung ohne Schweißzusatzwerkstoff oder mit einem bekannten Schweißzusatzwerkstoff durchgeführt und die Differenz zwischen ermittelten Schwingkreisparametern und den Referenzwerten zur Kalibrierung herangezogen. Beispielsweise kann bei nachfolgenden Messungen die Differenz von den ermittelten Schwingkreisparametern abgezogen werden, um auf die Referenzwerte kalibrierte Schwingkreisparameter zu erhalten. In einer bevorzugten Ausführung wird die Referenzmessung ohne Schweißzusatzwerkstoff durchgeführt.

Bei einer möglichen Ausführungsform der erfindungsgemäßen Detektionsvorrichtung 1 wird nach erfolgter Kalibrierung der Messanordnung anschließend, sofern erforderlich, eine Entmagnetisierung des Schweißdrahtes 5 durchgeführt. Nach erfolgter Kalibrierung und Entmagnetisierung erfolgt anschließend die Messung bzw. die Ermittlung der Schwingkreisparameter SKP des Schwingkreises 2, um den Durchmesser und/oder die Zusammensetzung des Schweißdrahtes bzw. des Schweißzusatzwerkstoffes 5 zu ermitteln. In Abhängigkeit der ermittelten bzw. detektierten Durchmesser bzw. der Zusammensetzung des durch die Spule 2A geführten Schweißdrahtes 5 können anschließend durch eine Steuereinheit 9 Schweißparameter SP automatisch eingestellt werden und/oder Aktoren 10 angesteuert werden. Weiterhin ist es möglich, anhand der ermittelten Änderung der Schwingkreisparameter SKP des durch die Spule 2A des Schwingkreises 2 geführten Schweißdrahtes 5 auch Übergänge zwischen verschiedenen Schweißdrahtsegmenten des Schweißdrahtes 5 und/oder ein Ende des Schweißdrahtes 5 automatisch zu erkennen.

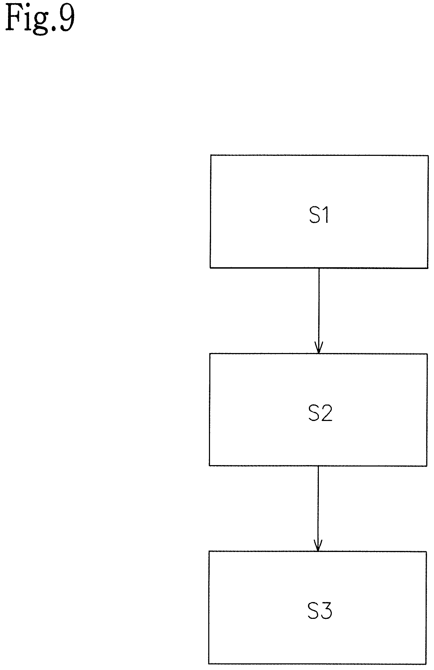

Fig. 9 zeigt ein Ablaufdiagramm zur Darstellung eines exemplarischen Ausführungsbeispiels des erfindungsgemäßen Verfahrens zum Detektieren eines Durchmessers und/oder einer Zusammensetzung eines Schweißdrahtes 5 und/oder einer Schwei-βelektrode 5 für ein Schweißgerät. In dem dargestellten Ausführungsbeispiel umfasst das erfindungsgemäße Verfahren im Wesentlichen drei Schritte.

In einem ersten Schritt S1 wird ein Schweißdraht durch eine Spule, die mit einer Kapazität einen Schwingkreis bildet, geführt.

In einem weiteren Schritt S2 wird anschließend mindestens ein erster Schwingkreisparameter SKP1, der für eine Dämpfung eines in dem Schwingkreis auftretenden Schwingungssignals charakteristisch ist, und mindestens ein zweiter Schwingkreisparameter SKP2, der für eine Signalfrequenz des in dem Schwingkreis auftretenden Schwingungssignals charakteristisch ist, ermittelt.

Schließlich wird im Schritt S3 der Durchmesser und/oder die Zusammensetzung des durch die Spule geführten Schweißdrahtes und/oder der durch die Spule geführten Schweißelektrode anhand der ermittelten Schwingkreisparameter detektiert. Dies erfolgt vorzugsweise in Abhängigkeit der im Schritt S2 ermittelten Schwingkreisparameter SKP durch Vergleich mit Referenzwerten, die aus einem Referenzwertdatenspeicher ausgelesen werden. Die Referenzwerte geben für verschiedene Durchmesser und/oder für verschiedene Zusammensetzungen von Schweißdrähten zu erwartende Schwingkreisparameter an. Die Referenzwerte der Schwingkreisparameter werden aus dem Referenzdatenspeicher ausgelesen und mit den ermittelten Schwingkreisparametern zur Detektion des Durchmessers und/oder der Zusammensetzung des durch die Spule des Schwingkreises geführten Schweißdrahtes verglichen. Die Ermittlung der Schwingkreisparameter SKP im Schritt S2 kann bei einer möglichen Ausführungsform bei bewegtem Schweißdraht durchgeführt werden. Bei einer alternativen Ausführungsform erfolgt die Ermittlung der Schwingkreisparameter im Schritt S2 bei stillstehendem Schweißdraht. Der im Schritt S3 detektierte Durchmesser und/oder die im Schritt S3 ermittelte Zusammensetzung des Schweißdrahtes kann bei einer möglichen Ausführungsform über eine Schnittstelle an eine Steuereinheit und/oder über eine Nutzerschnittstelle an einen Nutzer ausgegeben werden. In einem weiteren Schritt können anschließend Schweißparameter SP des Schweißgerätes in Abhängigkeit des übertragenen Durchmessers und/oder der übertragenen Zusammensetzung des Schweißdrahtes automatisch eingestellt werden. Bevor der Schweißdraht in Schritt S1 durch die Spule des Schwingkreises hindurchgeführt wird, kann bei einer möglichen Ausführungsform eine Kalibrierung von Komponenten der Detektionsvorrichtung und/oder eine Entmagnetisierung des zugeführten Schweißdrahtes ausgeführt werden.

Ein Vorteil des erfindungsgemäßen Verfahrens zum Detektieren eines Durchmessers und/oder einer Zusammensetzung eines Schweißdrahtes besteht darin, dass die Ermittlung der Schwingkreisparameter bzw. die Messung berührungslos während des Schweißbetriebes durchgeführt werden kann. Das erfindungsgemäße Verfahren eignet sich zur Qualitätsüberwachung eines Schweißprozesses. Es kann sowohl ein Werkstoff bzw. eine Werkstoffzusammensetzung als auch ein Durchmesser eines zugeführten Schweißzusatzwerkstoffes erkannt werden bzw. zumindest eine Plausibilitätsprüfung erfolgen. Das erfindungsgemäße Verfahren macht es möglich festzustellen, ob eine Drahtelektrode bzw. ein Schweißzusatzwerkstoff überhaupt in dem Schweißgerät eingespannt ist. Die Drahtelektrode bzw. Schweißelektrode kann hinsichtlich Durchmesser und Material mit einer angewählten Schweißkennlinie, einer Schweißanweisung, überprüft werden und der Schweißer bzw. Nutzer kann über ein Display bzw. eine Anzeige eine entsprechende Rückmeldung erhalten. Weiterhin kann eine Auswahl einer entsprechenden Schweißkennlinie auf Basis des detektierten Durchmessers und auf Basis der detektierten Zusammensetzung des Schweißdrahtes automatisch erfolgen. Weiterhin erlaubt das erfindungsgemäße Verfahren eine Referenzwertbestimmung verwendeter Zusatzwerkstoffe sowie eine Rückmeldung über mögliche Abweichungen hinsichtlich des gewünschten Schweißzusatzwerkstoffes und dem tatsächlich eingespannten Schweißzusatzwerkstoff. Bei einer möglichen Ausführungsform kann die Auswerteeinheit 3 der Detektionsvorrichtung 1 eine Stromquelle des Schweißgerätes ansteuern. Bei einer möglichen Ausführungsform erfolgt eine Entmagnetisierung des zugeführten Schweißdrahtes, sobald erkannt wird, dass er aus einem ferromagnetischen Material bzw. Werkstoff besteht. Bei einer alternativen Ausführungsform wird stets automatisch eine Entmagnetisierung unabhängig von der erkannten Werkstoffgruppe durchgeführt. Das erfindungsgemäße Verfahren eignet sich für beliebige Schweißverfahren, bei denen Schweißzusatzwerkstoffe eines Schweißprozesses zugeführt werden. Die erfindungsgemäße Detektionsvorrichtung 1 kann in einem Schweißgerät integriert werden. Bei einer weiteren möglichen Ausführungsform kann die Detektionsvorrichtung 1 auch in einem separaten Schweißdrahtzuführgerät integriert sein.

### Bezugszeichenliste

- 1: Detektionsvorrichtung
- 2: Schwingkreis
- 2A: Spule
- 2B: Kondensator
- 3: Auswerteeinheit
- 4: Leitung/Bus
- 5: Schweißzusatzwerkstoff
- 6: Leitung
- 7: Referenzwertdatenspeicher
- 8: Leitung
- 9: Steuereinheit
- 10: Aktor
- 11: Entmagnetisierungseinheit
- 11A: Entmagnetisierungsspule
- 11B: Entmagnetisierungsspule
- 11C: Signalgenerator

## Patentansprüche

1. Verfahren zum Detektieren eines Durchmessers und/oder einer Zusammensetzung eines Schweißdrahtes (5) und/oder einer Schweißelektrode (5) für ein Schweißgerät,
mit den folgenden Schritten:
(a) Führen (S1) des Schweißdrahtes (5) durch eine Spule (2A), die mit einer Kapazität einen Schwingkreis (2) bildet;
(b) Ermitteln (S2) mindestens eines ersten Schwingkreisparameters (SKP1), der für eine Dämpfung eines in dem Schwingkreis (2) auftretenden Schwingungssignals charakteristisch ist, und mindestens eines zweiten Schwingkreisparameters (SKP2), der für eine Signalfrequenz, f, des in dem Schwingkreis (2) auftretenden Schwingungssignals charakteristisch ist;
(c) Detektieren (S3) des Durchmessers und/oder der Zusammensetzung des durch die Spule (2A) geführten Schweißdrahtes (5) und/oder der Schweißelektrode (5) anhand der ermittelten Schwingkreisparameter (SKP1, SKP2;
charakterisiert dadurch, dass (d) vor der Ermittlung der Schwingkreisparameter (SKP1, SKP2) der Schweißdraht (5) durch die Spule (2A) des Schwingkreises (2) und/oder durch mindestens eine weitere Spule (11A, 11B) entmagnetisiert wird.

2. Verfahren nach Anspruch 1,
wobei der erste Schwingkreisparameter (SKP1) eine Schwingkreisgüte des Schwingkreises (2),
einen Wirbelstromverlust des Schwingkreises (2),
eine Signaldämpfung des Schwingungssignals und/oder eine Abklingzeit des Schwingungssignals aufweist,
wobei der zweite Schwingkreisparameter (SKP2) eine Induktivität der Spule (2A) des Schwingkreises (2) aufweist.

3. Verfahren nach einem der vorangehenden Ansprüche 1 oder 2,
wobei der Durchmesser und/oder die Zusammensetzung des durch die Spule (2A) des Schwingkreises (2) geführten Schweißdrahtes (5) in Abhängigkeit der ermittelten Schwingkreisparameter (SKP1, SKP2) durch Vergleich mit Referenzwerten (r) ermittelt werden,
wobei die Referenzwerte (r) für verschiedene Durchmesser und/oder für verschiedene Zusammensetzungen von Schweißdrähten zu erwartende Schwingkreisparameter (SKP1ᵣ, SKP2ᵣ) angeben,
wobei die Referenzwerte der Schwingkreisparameter (SKP1ᵣ, SKP2ᵣ) aus einem Referenzwertdatenspeicher (7) ausgelesen werden und mit den ermittelten Schwingkreisparametern (SKP1, SKP2) zur Detektion des Durchmessers und/oder der Zusammensetzung des durch die Spule (2A) des Schwingkreises (2) geführten Schweißdrahtes (5) verglichen werden.

4. Verfahren nach einem der vorangehenden Ansprüche 1 bis 3, wobei die Ermittlung der Schwingkreisparameter (SKP1, SKP2) bei bewegtem Schweißdraht (5) und/oder bei stillstehendem Schweißdraht (5) durchgeführt wird.

5. Verfahren nach einem der vorangehenden Ansprüche 1 bis 4, wobei in Abhängigkeit des ermittelten Durchmessers und/oder der ermittelten Zusammensetzung des Schweißdrahtes (5) eine Meldung ausgegeben wird.

6. Verfahren nach einem der vorangehenden Ansprüche 1 bis 5, wobei Schweißparameter (SP) des Schweißgerätes in Abhängigkeit des ermittelten Durchmessers und/oder der ermittelten Zusammensetzung des Schweißdrahtes (5) automatisch eingestellt werden.

7. Verfahren nach einem der vorangehenden Ansprüche 1 bis 6, wobei die Entmagnetisierung des Schweißdrahtes (5) bei bewegtem Schweißdraht (5) und/oder bei stillstehendem Schweißdraht (5) durchgeführt wird.

8. Verfahren nach einem der vorangehenden Ansprüche 1 bis 7, wobei der Schweißdraht (5) aus mehreren verbundenen Schweißdrahtsegmenten besteht, die jeweils einen eigenen Durchmesser und/oder eine eigene Zusammensetzung aufweisen,
wobei anhand einer ermittelten Änderung der Schwingkreisparameter (SKP1, SKP2) aufgrund des durch die Spule (2A) des Schwingkreises (2) geführten Schweißdrahtes (5) Übergänge zwischen verschiedenen Schweißdrahtsegmenten des Schweißdrahtes (5) und/oder ein Ende des Schweißdrahtes (5) erkannt werden.

9. Verfahren nach einem der vorangehenden Ansprüche 1 bis 8, wobei entlang des durch die Spule (2A) des Schwingkreises (2) geführten Schweißdrahtes (5) Markierungen vorhanden sind, welche Schwingkreisparameter des Schwingkreises (2) beeinflussen.

10. Detektionsvorrichtung (1) zur Detektion eines Durchmessers und/oder einer Zusammensetzung eines Schweißdrahtes (5) und/oder einer Schweißelektrode (5) für ein Schweißgerät,
wobei die Detektionsvorrichtung (1) aufweist:
- einen Schwingkreis (2), der eine Spule (2A) aufweist, durch welche der Schweißdraht (5) und/oder die Schweißelektrode (5) führbar ist;
- eine mit dem Schwingkreis (2) verbundene Auswerteeinheit (3) zur Ermittlung mindestens eines ersten Schwingkreisparameters (SKP1), welcher für eine Dämpfung eines in dem Schwingkreis (2) auftretenden Schwingungssignals charakteristisch ist, und mindestens eines zweiten Schwingkreisparameters (SKP2), welcher für eine Signalfrequenz, f, des in dem Schwingkreis (2) auftretenden Schwingungssignals charakteristisch ist,
wobei die Auswerteeinheit (3) den Durchmesser und/oder die Zusammensetzung des durch die Spule (2A) des Schwingkreises (2) geführten Schweißdrahtes (5) und/oder der Schweißelektrode (5) anhand der ermittelten Schwingkreisparameter (SKP1, SKP2) detektiert;
charakterisiert dadurch, dass die Detektionsvorrichtung (1) eine Entmagnetisierungseinheit (11) zur Entmagnetisierung des Schweißdrahtes (5) und/oder der Schweißelektrode (5) aufweist.

11. Detektionsvorrichtung nach Anspruch 10,
wobei der Schwingkreis (2) ein LC-Parallelschwingkreis ist, der die Spule (2A) und einen Kondensator (2B) aufweist.

12. Detektionsvorrichtung nach Anspruch 10 oder 11,
wobei die Auswerteeinheit (3) den Durchmesser und/oder die Zusammensetzung des durch die Spule (2A) des Schwingkreises (2) geführten Schweißdrahtes (5) in Abhängigkeit der ermittelten Schwingkreisparameter (SKP1, SKP2) durch Vergleich mit Referenzwerten ermittelt, die in einem Referenzdatenspeicher (7) gespeichert sind, auf welchen die Auswerteeinheit (3) Zugriff hat.

13. Detektionsvorrichtung nach einem der vorangehenden Ansprüche 10 bis 12,
wobei die Detektionsvorrichtung (1) eine Kalibriereinheit zur Kalibrierung von Schwingkreiskomponenten des Schwingkreises (2) aufweist.

14. Schweißgerät mit einer Schweißdrahtzuführeinheit zum Zuführen eines Schweißdrahtes (5) und/oder einer Schwei-βelektrode (5) und mit einer Detektionsvorrichtung (1) nach einem der vorangehenden Ansprüche 10 bis 13.

15. Schweißdrahtzuführeinheit zum Zuführen eines Schweißdrahtes (5) und/oder einer Schweißelektrode (5), wobei die Schweißdrahtzuführeinheit eine Detektionsvorrichtung (1) nach einem der vorangehenden Ansprüche 10 bis 13 aufweist.

## Claims

1. Method for detecting a diameter and/or composition of a welding wire (5) and/or welding electrode (5) for a welding device,
comprising the following steps:
(a) passing (S1) the welding wire (5) through a coil (2A) which, with a capacitor, forms an oscillating circuit (2) ;
(b) determining (S2) at least one first oscillating circuit parameter (SKP1) which is characteristic of an attenuation of an oscillation signal occurring in the oscillating circuit (2) and at least one second oscillating circuit parameter (SKP2) which is characteristic of a signal frequency, f, of the oscillation signal occurring in the oscillating circuit (2) ;
(c) detecting (S3) the diameter and/or the composition of the welding wire (5) passed through the coil (2A) and/or the welding electrode (5) by means of the determined oscillating circuit parameters (SKP1, SKP2);
**characterised in that**
(d) the welding wire (5) is demagnetised by the coil (2A) of the oscillating circuit (2) and/or by at least one further coil (11A, 11B) before the oscillating circuit parameters (SKP1, SKP2) are determined.

2. Method as claimed in claim 1,
wherein the first oscillating circuit parameter (SKP1) comprises an oscillating circuit quality of the oscillating circuit (2), an eddy current loss of the oscillating circuit (2), a signal attenuation of the oscillation signal and/or a decay time of the oscillation signal,
wherein the second oscillating circuit parameter (SKP2) comprises an inductance of the coil (2A) of the oscillating circuit (2).

3. Method as claimed in any one of the preceding claims 1 or 2, wherein the diameter and/or the composition of the welding wire (5) passed through the coil (2A) of the oscillating circuit (2) are determined as a function of the determined oscillating circuit parameters (SKP1, SKP2) by comparison with reference values (r),
wherein the reference values (r) specify oscillating circuit parameters (SKP1ᵣ, SKP2ᵣ) to be expected for different diameters and/or for different compositions of welding wires, wherein the reference values of the oscillating circuit parameters (SKP1ᵣ, SKP2ᵣ) are read out from a reference value data store (7) and are compared with the determined oscillating circuit parameters (SKP1, SKP2) to detect the diameter and/or the composition of the welding wire (5) passed through the coil (2A) of the oscillating circuit (2).

4. Method as claimed in any one of the preceding claims 1 to 3, wherein the oscillating circuit parameters (SKP1, SKP2) are determined whilst the welding wire (5) is moving and/or whilst the welding wire (5) is stationary.

5. Method as claimed in any one of the preceding claims 1 to 4, wherein a message is outputted as a function of the determined diameter and/or determined composition of the welding wire (5) .

6. Method as claimed in any one of the preceding claims 1 to 5, wherein welding parameters (SP) of the welding device are set automatically as a function of the determined diameter and/or the determined composition of the welding wire (5).

7. Method as claimed in any one of the preceding claims 1 to 6, wherein the welding wire (5) is demagnetised whilst the welding wire (5) is moving and/or whilst the welding wire (5) is stationary.

8. Method as claimed in any one of the preceding claims 1 to 7, wherein the welding wire (5) consists of a plurality of connected welding wire segments which each have their own diameter and/or their own composition,
wherein transitions between different welding wire segments of the welding wire (5) and/or an end of the welding wire (5) are recognised by way of a determined change in the oscillating circuit parameters (SKP1, SKP2) caused by the welding wire (5) passed through the coil (2A) of the oscillating circuit (2).

9. Method as claimed in any one of the preceding claims 1 to 8, wherein markings which influence oscillating circuit parameters of the oscillating circuit (2) are present along the welding wire (5) passed through the coil (2A) of the oscillating circuit (2).

10. Detection apparatus (1) for detecting a diameter and/or composition of a welding wire (5) and/or welding electrode (5) for a welding device,
wherein the detection apparatus (1) comprises:
- an oscillating circuit (2) which comprises a coil (2A), through which the welding wire (5) and/or the welding electrode (5) can be passed;
- an evaluation unit (3) connected to the oscillating circuit (2) for determining at least one first oscillating circuit parameter (SKP1) which is characteristic of an attenuation of an oscillation signal occurring in the oscillating circuit (2) and at least one second oscillating circuit parameter (SKP2) which is characteristic of a signal frequency, f, of the oscillation signal occurring in the oscillating circuit (2),
wherein the evaluation unit (3) detects the diameter and/or the composition of the welding wire (5) passed through the coil (2A) of the oscillating circuit (2) and/or of the welding electrode (5) by means of the determined oscillating circuit parameters (SKP1, SKP2);
**characterised in that**
- the detection apparatus (1) comprises a demagnetisation unit (11) for demagnetising the welding wire (5) and/or the welding electrode (5).

11. Detection apparatus as claimed in claim 10,
wherein the oscillating circuit (2) is an LC parallel oscillating circuit which comprises the coil (2A) and a capacitor (2B).

12. Detection apparatus as claimed in claim 10 or 11,
wherein the evaluation unit (3) determines the diameter and/or the composition of the welding wire (5) passed through the coil (2A) of the oscillating circuit (2) as a function of the determined oscillating circuit parameters (SKP1, SKP2) by comparison with reference values which are stored in a reference data store (7), to which the evaluation unit (3) has access.

13. Detection apparatus as claimed in any one of the preceding claims 10 to 12,
wherein the detection apparatus (1) comprises a calibration unit for calibrating oscillating circuit components of the oscillating circuit (2).

14. Welding device having a welding wire supply unit for supplying a welding wire (5) and/or a welding electrode (5) and having a detection apparatus (1) as claimed in any one of the preceding claims 10 to 13.

15. Welding wire supply unit for supplying a welding wire (5) and/or a welding electrode (5), wherein the welding wire supply unit comprises a detection apparatus (1) as claimed in any one of the preceding claims 10 to 13.

## Revendications

1. Procédé de détection d'un diamètre et/ou d'une composition d'un fil de soudage (5) et/ou d'une électrode de soudage (5) pour un appareil de soudage, comprenant les étapes suivantes consistant à :
(a) faire passer (S1) le fil de soudage (5) à travers une bobine (2A) qui, avec une capacité, forme un circuit oscillant (2) ;
(b) déterminer (S2) au moins un premier paramètre de circuit oscillant (SKP1), qui est caractéristique d'un amortissement d'un signal oscillant se produisant dans le circuit oscillant (2), et au moins un deuxième paramètre de circuit oscillant (SKP2), qui est caractéristique d'une fréquence de signal, f, du signal oscillant se produisant dans le circuit oscillant (2) ;
c) détecter (S3) le diamètre et/ou la composition du fil de soudage (5) passé à travers la bobine (2A) et/ou de l'électrode de soudage (5) sur la base des paramètres de circuit oscillant détectés (SKP1, SKP2) ;
**caractérisé en ce que**
d) avant la détermination des paramètres de circuit oscillant (SKP1, SKP2), le fil de soudage (5) est démagnétisé par la bobine (2A) du circuit oscillant (2) et/ou par au moins une autre bobine (11A, 11B).

2. Procédé selon la revendication 1,
dans lequel le premier paramètre de circuit oscillant (SKP1) est une qualité de circuit oscillant du circuit oscillant (2), une perte par courants de Foucault du circuit oscillant (2), un amortissement de signal du signal oscillant et/ou un temps de décroissance du signal oscillant,
dans lequel le deuxième paramètre de circuit oscillant (SKP2) est une inductance de la bobine (2A) du circuit oscillant (2).

3. Procédé selon l'une des revendications 1 ou 2 précédentes, dans lequel le diamètre et/ou la composition du fil de soudage (5) passé à travers la bobine (2A) du circuit oscillant (2) sont déterminés en fonction des paramètres de circuit oscillant déterminés (SKP1, SKP2) par comparaison avec des valeurs de référence (r),
dans lequel les valeurs de référence (r) indiquent les paramètres de circuit oscillant (SKP1ᵣ, SKP2ᵣ) auxquels il faut s'attendre pour différents diamètres et/ou pour différentes compositions de fils de soudage,
dans lequel les valeurs de référence des paramètres de circuit oscillant (SKP1ᵣ, SKP2ᵣ) sont lues dans une mémoire de données de valeurs de référence (7) et sont comparées avec les paramètres de circuit oscillant déterminés (SKP1, SKP2) pour détecter le diamètre et/ou la composition du fil de soudage (5) passé à travers la bobine (2A) du circuit oscillant (2).

4. Procédé selon l'une des revendications 1 à 3 précédentes, dans lequel la détermination des paramètres de circuit oscillant (SKP1, SKP2) est effectuée avec le fil de soudage (5) en mouvement et/ou avec le fil de soudage (5) stationnaire.

5. Procédé selon l'une des revendications 1 à 4 précédentes, dans lequel un message est émis en fonction du diamètre déterminé et/ou de la composition déterminée du fil de soudage (5).

6. Procédé selon l'une des revendications 1 à 5 précédentes, dans lequel des paramètres de soudage (SP) de l'appareil de soudage sont automatiquement réglés en fonction du diamètre déterminé et/ou de la composition déterminée du fil de soudage (5).

7. Procédé selon l'une des revendications 1 à 6 précédentes, dans lequel la démagnétisation du fil de soudage (5) est effectuée avec le fil de soudage (5) en mouvement et/ou avec le fil de soudage (5) stationnaire.

8. Procédé selon l'une des revendications 1 à 7 précédentes, dans lequel le fil de soudage (5) est constitué de plusieurs segments de fil de soudage reliés qui présentent chacun son propre diamètre et/ou sa propre composition,
dans lequel des transitions entre différents segments de fil de soudage (5) et/ou une extrémité du fil de soudage (5) sont détectées sur la base d'une modification déterminée des paramètres de circuit oscillant (SKP1, SKP2) due au passage du fil de soudage (5) à travers la bobine (2A) du circuit oscillant (2).

9. Procédé selon l'une des revendications 1 à 8 précédentes, dans lequel des marquages sont présents le long du fil de soudage (5) passé à travers la bobine (2A) du circuit oscillant (2), lesquels influencent les paramètres de circuit oscillant du circuit oscillant (2).

10. Dispositif de détection (1) pour détecter un diamètre et/ou une composition d'un fil de soudage (5) et/ou d'une électrode de soudage (5) pour un appareil de soudage,
le dispositif de détection (1) comprenant :
- un circuit oscillant (2) qui présente une bobine (2A) à travers laquelle le fil de soudage (5) et/ou l'électrode de soudage (5) peuvent être passés ;
- une unité d'évaluation (3) reliée au circuit oscillant (2) pour déterminer au moins un premier paramètre de circuit oscillant (SKP1), qui est caractéristique d'un amortissement d'un signal oscillant se produisant dans le circuit oscillant (2), et au moins un deuxième paramètre de circuit oscillant (SKP2), qui est caractéristique d'une fréquence de signal, f, du signal oscillant se produisant dans le circuit oscillant (2),
dans lequel l'unité d'évaluation (3) détecte le diamètre et/ou la composition du fil de soudage (5) passé à travers la bobine (2A) du circuit oscillant (2) et/ou de l'électrode de soudage (5) sur la base des paramètres de circuit oscillant déterminés (SKP1, SKP2) ;
**caractérisé en ce que**
- le dispositif de détection (1) présente une unité de démagnétisation (11) pour démagnétiser le fil de soudage (5) et/ou l'électrode de soudage (5).

11. Dispositif de détection selon la revendication 10,
dans lequel le circuit oscillant (2) est un circuit oscillant parallèle LC qui présente la bobine (2A) et un condensateur (2B) .

12. Dispositif de détection selon la revendication 10 ou 11,
dans lequel l'unité d'évaluation (3) détermine le diamètre et/ou la composition du fil de soudage (5) passé à travers la bobine (2A) du circuit oscillant (2) en fonction des paramètres de circuit oscillant déterminés (SKP1, SKP2) par comparaison avec des valeurs de référence qui sont stockées dans une mémoire de données de référence (7) à laquelle l'unité d'évaluation (3) a accès.

13. Dispositif de détection selon l'une des revendications 10 à 12 précédentes,
dans lequel le dispositif de détection (1) présente une unité d'étalonnage pour étalonner des composants de circuit oscillant du circuit oscillant (2).

14. Appareil de soudage comprenant une unité d'amenée de fil de soudage pour amener un fil de soudage (5) et/ou une électrode de soudage (5) et comprenant un dispositif de détection (1) selon l'une des revendications 10 à 13 précédentes.

15. Unité d'amenée de fil de soudage pour amener un fil de soudage (5) et/ou une électrode de soudage (5), l'unité d'amenée de fil de soudage présentant un dispositif de détection (1) selon l'une des revendications 10 à 13 précédentes.
